# EUROPEAN PATENT SPECIFICATION

(11) **EP 4 108 422 B1**
(45) Date of publication and mention of the grant of the patent: **07.10.2026**
(21) Application number: 21181807.5
(22) Date of filing: 25.06.2021
(51) Int. Cl.: B29C 64/20, B29C 64/295, B29C 70/38, B29C 70/08

(54) **FIBRE INTERLAYERS**
FASERZWISCHENSCHICHTEN
INTERCOUCHES DE FIBRES

(43) Date of publication of application: 28.12.2022
(73) Proprietor: GKN Aerospace Deutschland GmbH, 81249 Munich (DE); CEAD B.V., 2627 BP Delft (NL)
(72) Inventor: STRACHAUER, Frank, 81249 Munich (DE); LOGTENBERG, Maarten Jan, 2627BP Delft (NL); WEGHORST, Jasper Vincent Maria, 2627BP Delft (NL)
(74) Representative: D Young & Co LLP

(56) References cited:
- WO-A2-2020/087048
- GB-A- 2 526 328
- US-A1- 2018 370 129
- US-A1- 2019 315 056
- US-A1- 2019 366 627
- US-A1- 2020 114 539
- US-B1- 10 571 642

## Description

### Technical Field

The present invention is concerned with an apparatus and manufacturing method for fibre additive manufacture. The apparatus and method described herein is particularly, but not exclusively, suitable for complex multi-layered composite components of the type used in the aerospace industry. As described herein, the apparatus and method have numerous other applications.

The term 'composite component' is intended to refer to a component that comprises a thermoplastic material and also reinforcing fibres. One example in the art is Carbon Fibre Reinforced Plastic (CFRP). This material is a well-used composite material used in the aerospace industry for manufacturing a range of components.

Components are formed using such a conventional composite material by laying-up,that is placing a woven fibre material onto a mould corresponding to the desired shape of the component to be manufactured. This is repeated a number of times to create a multi-layered structure. A resin may be impregnated onto the fibre or may be added to the structure. The resulting structure is then cured, for example in an autoclave, to allow for consolidation of the resin which can also harden. A hardened composite component comprising the fibres encapsulated in resin can then be created.

Such a technique is widely used in the aerospace industry to create highly accurate CFRP components and tooling which are both extremely light and strong. A drawback of these conventional methods is that although they allow highly accurate components to be manufactured they are generally highly labour intensive unless auto-lay-up machines are used. Such machines decrease manufacturing times but dramatically increase costs. Furthermore, such machines can be extremely complex and large. Still further, the ability of optimise local regions of components in terms of thermal and mechanical properties is not easily realised. The inventors have devised an alternative apparatus and method for creating composite components of the type suitable for the aerospace and other industries.

Specifically, an apparatus and method described herein provides a highly versatile arrangement that not only allows for complex three-dimensional shapes and profiles to be formed but it also allows for local control of thermal and mechanical properties, amongst other advantages, to be realised in a high throughput manufacturing process.

US 2019/0315056 A1 refers to a system for use in additively manufacturing a composite structure. The system may include at least one support, and a print head operatively connected to the at least one support and configured to discharge composite material. The system may further include an auxiliary tool operatively connected to the at least one support and configured to receive the composite material discharged by the print head.

### Summary of the Invention

Aspects of the invention are set out in the accompanying claims.

Viewed from a first aspect, there is provided a method as defined in claim 1.

According to the method and apparatus described herein, it is possible to provide a discontinuous process in which the extrusions and laying of fibres are performed sequentially i.e. one after the other. Another way to describe this is an 'in-line process'.

By separating the process of the placement of the thermoplastic and the placement of the impregnated continuous fibres it is possible to provide a highly controllable and adaptable process. Conventional co-extrusion processes do not provide for this new level of control. The method and apparatus not only allows complex components to be formed but also allows for control of the mechanical and thermal performance of the resulting component on a layer-by-layer basis as described herein.

Advantages of an apparatus and method described herein include, but are not limited to:
1. Method for combining a thermoplastic material (primary layer) with pre-impregnated fibrous material (secondary layer) in one step inline.
2. Combination of short and continuous/long fibre
3. Possibility of implementing continuous/long fibres in uni-, bi-directional and multi-directional orientation at same time
4. Possibility to start and stop continuous fibre feeding during printing to reduce the coefficient of thermal expansion (CTE) at specific places of the product.
5. Very low coefficient of thermal expansion (CTE) to meet high dimensional accuracy at high temperatures
6. Upscalable 3D printing process for large applications, high mass output and thick single wall thickness of 15-20 mm or more for reduced printing time
7. Combination of different matrix systems for primary and secondary layers
8. Variable ratio of short fibre to long fibre by separate process execution can be used to tailor material properties and thermal expansion behaviour to specific part requirements

It will be recognised that the features and advantages described above with reference to the apparatus statements apply equally and interchangeably to the method of manufacturing.

The acronym '3DP' used herein is intended to refer to the process of three-dimensional printing, specifically the process of building a three-dimensional component or part by successive layers of printing to achieve the desired finished component geometry.

The second layer formed according to the method may be in the form of a thermoplastic material containing a fibrous component. The fibrous component may, for example, be in the form of an elongate carbon fibre or other components which have advantageous mechanical properties such as tensile strength.

For example, the fibrous component may be selected from (a) a continuous fibre extending through the thermoplastic; or (b) a plurality of discrete discontinuous fibres extending through the thermoplastic. This selection may be made according to the desired mechanical and thermal properties of the component as a whole or a sub-set of the component.

Each of the first and second layers may also be laid as a plurality of adjacent strips, each strip abutting with an adjacent strip to form a continuous layer surface extending in multiple directions. Thus, a narrower print head can be used whilst still forming a large width complex component.

Furthermore, the fibres within the second and subsequent layers may be selectively cut or separated at predetermined lengths before being laid upon a preceding layer. Again, the thermal and mechanical properties of each layer may therefore be optimised and aligned with the desired performance of the component. A high level of control can therefore be achieved.

For example, the mechanical properties of a component may be non-uniform through the thickness and width of the component. Similarly the thermal properties may also be adapted allowing for not only complex geometries but the added controllability of mechanical and thermal properties.

The fibres within the second layer may for example be cut at lengths according to a predetermined fibre length distribution across each layer and through the thickness of the component.

The second and subsequent layers may be laid immediately after each first (preceding) layer within a pair of first and second layers. The timing may be such that bonding (welding) of the two layers is achieved as the two layers are laid against each other. Heat sources which could be in the form of a light source and/or hot air may be used to pre-heat existing layers for improving the bonding/adhesion between different layers

Furthermore, the second layer may be laid at an angle with respect to the angle at which the first or preceding layer has been laid. Thus in combination with the fibrous component the mechanical properties can be adjusted again to provide the desired overall mechanical performance of the component. By laying fibres at different angles with respect to one-another it is possible to provide structural strength in multiple directions.

The second layer may be laid by means of a feed mechanism wherein the feed mechanism may be selectively controlled so as to selectively start and stop feed of the fibrous containing layer during laying of the first and second layers. Thus, the fibrous content of each layer can be controlled.

Advantageously some layers may not contain any fibrous content at all thereby further allowing for controllability of the resultant product being formed, as well as the properties of the resultant product being formed.

One or more of the lengths, distribution and/or relative angle of laying up of the reinforcement fibres with respect to one or more preceding layer(s) may be changed between different layers of the component being manufactured. A highly optimised layered component can thus be created with varying strength, rigidity and thermal performance both cross and through the component. Finite element analysis and stress/thermal modelling may allow for each layer of a component to be optimised. A tapered performance profile through and across the component may be realised according to a method and apparatus described herein.

For example, the laying up of the first and/or second layers may be performed according to a predetermined fibre distribution profile corresponding to a predetermined mechanical and/or thermal operating profile of the component.

Still further, a preceding layer is pre-heated prior to a subsequent layer being laid upon the layer. Pre-heating a preceding layer enhances the bonding (welding) between adjacent (and preceding) layers and also allows for large area components to be formed whilst maintaining good bonding (welding) between adjacent (and preceding) layers.

After being laid a compaction force may also advantageously be applied to the upper surface of the top layer. The main function of this component is to pressurize/push the tape into the hot bead/layer preventing air voids as well. The compaction roller/wheel is cooled to prevent the thermoplastic material from sticking on to the wheel. This may, for example, by means of a cylindrical roller arranged in line with the laying up process. Such a roller may be heated and or cooled to adjust how the bonding (welding) between adjacent layers takes place. The compaction force can be adjusted by adjusting the roller height. The roller improves the interlaminar strength, prevent air voids and ensure a precisely defined material height. It may also have variable pressure to ensure a quality body between preceding layers.

The fibrous material may for example be carbon fibres with PEI manufactured by Toray Advanced Composites and the thermoplastic may be PEI with carbon short fibres manufactured by Airtech Advanced Materials Group.

Viewed from another aspect there is provided a multi-component composite material additive manufacture as defined in claim 13.

The apparatus may be arranged in use to lay the primary layer in a first direction as a plurality of adjacent strips of primary material, each strip in abutment to an adjacent strip and collectively forming a primary layer.

Furthermore, the apparatus may also be arranged in use to lay one or more of the secondary layers in a different laying direction to that of the primary and/or a preceding secondary layer. The apparatus may also be arranged in use to selectively cut or separate the fibrous material within the secondary layer prior to laying onto a preceding primary layer. Thus, the mechanical properties of each layer can be controlled as discussed above.

A heating apparatus may additionally be arranged to heat an upper surface of a preceding primary layer prior to laying of a secondary layer. Furthermore, a compression arrangement may be provided and arranged to compress a laid secondary layer against a preceding primary layer. Advantageously, such a compression arrangement can be also used to press two primary layers together when the secondary layer is not used.

The compression arrangement may be in the form of a roller arranged in use to be brought into contact with the upper surface of the secondary layer and optionally including a roller cooling mechanism. A cooling mechanism, such as a water circuit or similar. The main function of the water-cooled roller is to prevent the thermoplastic material from sticking onto the wheel, not to improve the cool-down time.

The primary layer may also be laid utilizing an extruder having a discharge nozzle for laying the primary material onto the substrate or preceding layer. An auger and heater arrangement with a discharge nozzle may be used to melt and extrude the primary material.

An example of such a device is manufactured by CEAD B.V. called the "robot extruder".

Furthermore, the primary material may be laid from an extruder mechanism and the secondary material may be laid from a supply spool mechanism, wherein the supply spool mechanism comprises a heater mechanism arranged to heat the secondary material in advance of being laid, a drive mechanism to drive the secondary material from a spool and through the heater mechanism and an optional cutting arrangement arranged in use to cut or separate fibres contained within the secondary material.

Viewed from another aspect there is provided an additive manufacturing apparatus comprising a robotic manipulator arranged to move in multiple directions and to support a multi-component composite material additive manufacture apparatus as described above, the robotic manipulator arranged in use to follow: (A) a pre-determined movement program to form a multi-layered, multi-material composite component profile; and (B) a pre-determined fibre distribution pattern of continuous or discontinuous fibres.

Aspects of inventions described herein also extend to an aerospace component manufactured according to the method and or apparatus described herein and also to an aerospace component being an aerodynamic component of an aircraft structure, such as a landing gear door as one example.

### Brief Description of the Drawings

One or more embodiments of the invention will now be described, by way of example only, and with reference to the following figures in which:
Figure 1 shows the fundamental layers of a component formed according to a manufacturing apparatus and method described herein;
Figure 2 shows an alternative prior art arrangement of in-situ impregnation manufacturing;
Figure 3 shows an alternative component according to figure 1 illustrating a different more complex geometry;
Figure 4 shows the a schematic of the primary sub-elements of the manufacturing apparatus according to an invention described herein and the associated juxtaposition of the sub-elements in the apparatus;
Figures 5 V1, V2 and V3 illustrate alternative reinforcement fibre distribution patterns and types;
Figure 6 illustrates a further more complex/hybrid distribution pattern of reinforcement fibres and associated layers; and
Figure 7 illustrates how successive layers may be laid at different angles to preceding layers.

While the invention is susceptible to various modifications and alternative forms, specific embodiments are shown by way of example in the drawings and are herein described in detail.

It should be understood however that the drawings and detailed description attached hereto are not intended to limit the invention to the particular form disclosed but rather the intention is to cover all modifications, equivalents and alternatives falling within the scope of the invention as defined in the appended claims.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples. It will also be recognised that the invention covers not only individual embodiments but also a combination of the embodiments described herein.

### Detailed Description

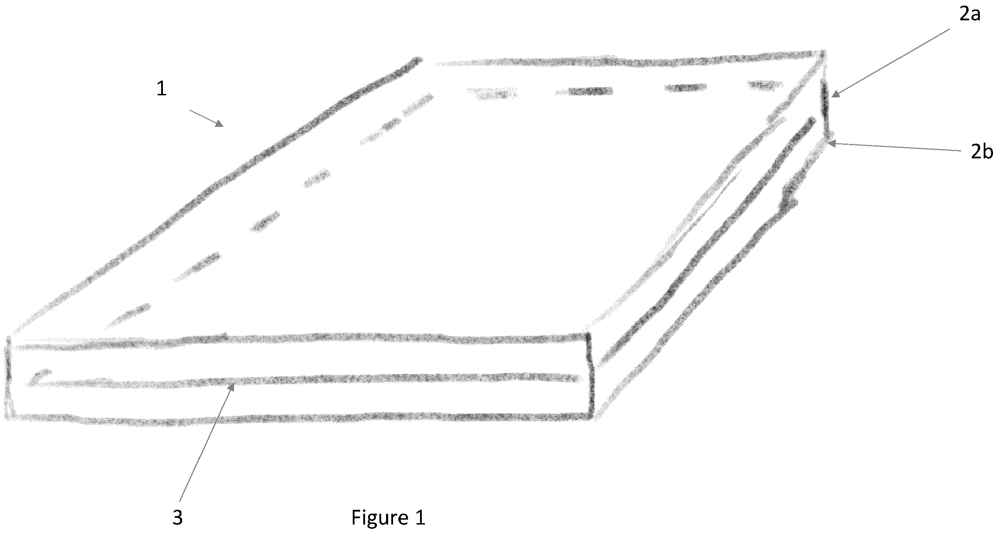

Figure 1 shows the fundamental layers of a component formed according to a manufacturing apparatus and method described herein.

As shown in figure 1, a composite component 1 is formed of a plurality of layers as described below.

The term 'composite' is a term known in the field of, for example, carbon fibre reinforced plastic (CFRP) components which are common in the aerospace industry owing to their light weight and high strength. Composite components are generally formed of a binding resin which encapsulates stronger fibres such as carbon fibre. Carbon fibres have high tensile strengths and when encapsulated in resin materials and hardened can provide very high strength and lightweight components.

Conventionally components are formed by laying up woven fabrics made of carbon fibres into a mould of the desired component shape, impregnating them with resin and then curing them (hardening them) in either a vacuum (called out-of-autoclave) or in a heater autoclave (in-autoclave). These processes are time consuming and expensive.

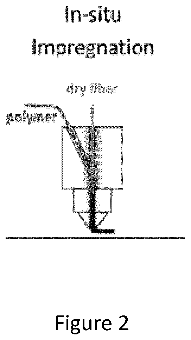

An alternative process which has been developed, involves simultaneously injecting a polymer into a die which also receives a dry fibre. This is illustrated in figure 2. Here, the polymer and fibre are brought together in the die which can then be used to lay down or print part of a component. This arrangement has brought some improvements to manufacturing of composite parts and represents a level of 3D printing to composite components.

However, there remain barriers to the use of 3DP composite components/toolings in many applications. These barriers are two-fold. First, the intense manufacturing costs in terms of time and equipment result in making the large scale production of composite components prohibitive. Secondly, composite components do not allow for close alignment of coefficients of thermal expansion (CTE) of the material with the desired performance of the end product.

Both of these factors have led to the limited use of 3 dimensional printing (3DP) composites in many applications.

Specifically it has been noted that in prior art '3D printing' autoclave tooling (which is short fibre reinforced) above 2m in length brings issues regarding thermal expansion, especially when used in high temperature environments such as in the autoclave which can reach curing temperature of 180°C. To date it has not been possible to provide a 3DP manufacturing method that allows for a CTE value as close as the final product as possible and which allows for competitive production methods.

According to an invention as described herein, there is provided a method and apparatus which is capable of placing continuous fibres impregnated with a thermoplastic in a specific predetermined pattern. The method and apparatus can lay or 'stack' several patterns in order to create a shape in three dimensions i.e. x and y and also depth z. In effect the method and apparatus provide a "sandwich" or laminate structure with layers of thermoplastic filled with 'chopped' or cut fibres or without fibres and pre-impregnated layers of continuous and/or long fibres in unidirectional or bidirectional direction. The material properties created from the final product are important for the desired application and can be tuned to the application needs.

Returning to figure 1, an example composite component 1 in its simplest form comprises two thermoplastic layers 2a, 2b and an intermediate or interstitial layer 3. In the example shown in figure 1 the intermediate layer 3 extends (as a ghost surface in the figure) across the whole area of the component 1. As described below this need not be the case.

The two opposing thermoplastic layers 2a, 2b are arranged on either side of the intermediate layer and may be formed of any suitable thermoplastic material depending on the chosen application.

Examples of materials include:
- Aerospace: PESU, PPSU, PEI, PEEK, PAEK and other similar materials;
- other industries: PP, ABS, PC, and similar thermoplastic resins.

The intermediate layer 3 acts as the reinforcement layer and comprises reinforcing fibres. These fibres, as described below may be arranged in a number of orientations relative to the thermoplastic layers 2a, 2b. For example, the fibres may be continuous and aligned with one side edge or may be random or aligned at particular angles with respect to the layers 2a, 2b.

As described above, the fibres may have high strength in a tensile direction meaning that aligning the fibres in particular directions can increase the tensile strength in that direction. In addition, the thermal characteristic of the component can also be adapted by this selective alignment of fibres, and also by providing breaks or discontinuities in the fibre lengths as described below.

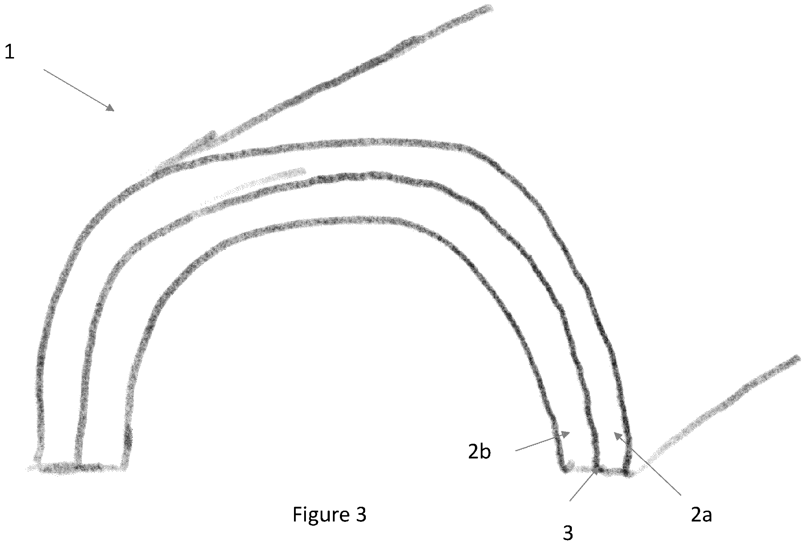

Figure 3 shows an alternative component according to figure 1 illustrating a different and more complex geometry.

In figure 3 a curved component 1 has been formed by laying the first thermoplastic layer 2a over a mould or mandrel (not shown) corresponding to the desired shape of the end component. This laying up may be achieved by mounting the laying up equipment on suitable robotic manipulators or arms as described below.

Next, the reinforcement or/and fibre-containing layer 3 is then laid on the outside of layer 2a and finally a second layer of thermoplastic is laid on the outside of the reinforcement (fibre) layer 3, again corresponding to the profile of the component. It will be recognised that complex geometries may be followed by a suitably dexterous robotic arm. The process described herein advantageously applies 2 layers at the same time. One thermoplastic layer with/without short fibres and on top a pre-impregnated layer with continuous or long fibres. The process also allows the printing of only one single layer of thermoplastic with/without short fibres. The feeding with continuous or long fibres can be interrupted during the printing process as required according to the desired component.

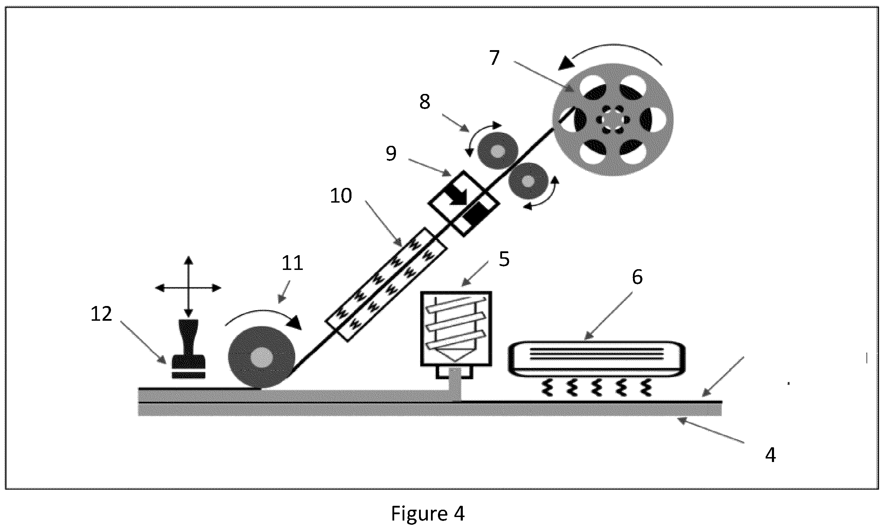

The laying up apparatus itself will now be described with reference to figure 4. As will be described an apparatus and method described herein involves a separated co-extrusion of pre-impregnated continuous fibre reinforcement with alternating 3D printed layer and continuous fibre reinforcement in one inline step. A continuous process may be realised.

Referring to figure 4 the apparatus comprises, but is not limited to, the following components:

### Reference 4 Substrate support surface

Figure 4 illustrates a flat surface as one example but with reference to figure 3 it will be recognised that the surface upon which the composite component is formed may be a mould or other shape corresponding to the desired end product. For example, the profile may correspond to a fan blade in which the mould corresponds to the aerodynamic contours of the blade. Similarly, in an application for a landing flap, other contours and reinforcement structures may be provided to be followed.

The substrate support surface may be static or may itself be movable relative to the remainder of the apparatus providing an additional degree of freedom of movement.

The substrate support surface can be pre-heated in order to minimize stresses inside the final part.

### Reference 5 Extruder Unit

The extruder unit 5 is in one example a heated auger arrangement which heats a thermoplastic material and forces the material out of a die and onto the substrate support surface or preceding layer of the component being formed. An example extruder unit is manufactured by CEAD. (www.robotextruder.com)

The extruder unit is located after the substrate heater described below in a manufacturing flow direction. The speed and flow rate of the extruder unit may be controlled so as to control the thickness of the thermoplastic layer be laid down and can be increased as manufacturing speed increases or as thickness requirements of the component change. As with the other components shown in figure 4 the entire assembly may be pivotally mounted so that components such as that shown in figure 3 may be manufactured. The entire unit can be mounted on for instance a 6 axis industrial robot or 5 axis machine for increased freedom.

The extruder unit may eject pure thermoplastic or may alternatively eject a blend of thermoplastic and short fibre reinforcement i.e. relatively short lengths of reinforcement fibres blended into the thermoplastic. This blend enhances the over strength of each of the thermoplastic layers owing to the tensile strength of the fibres.

### Reference 6 Substrate Pre-heater

The substrate pre-heater acts to pre-heat the substrate or preceding layer of the component before the subsequent layer is laid on top. Heating the previous layer causes the thermoplastic (the primary layer as well as the thermoplastic impregnated fibre material of the secondary layer) to become tacky and sticky which facilitates bonding (welding) of the subsequent layer to the preceding layer surface. It also encourages air pockets and bubbles to be released that could create discontinuities in the component structure.

The substrate pre-heater may heat the substrate or preceding layer using a range of heating sources, for example including infrared, laser or other heat source. In effect the heat source ensures adequate layer fusion with the preceding layer.

'The components above refer to the laying up arrangement for preceding layers.

### References 7 and 8 Supply Spool & Drive Wheel

The supply spool contains and releases a continuous supply of pre-impregnated continuous fibre material i.e. the material comprises one or more continuous reinforcement fibres wrapped around a supply spool. An example of one material may be, for example, continuous carbon fibre uni-directional tape impregnated with PESU.

The supply spool may be loaded with material of different widths thereby adjusting the number of passes required to form the width of a desired component.

The material is removed from the spool by the drive wheel or mechanism 8 which is controlled according to the speed of laying of the material. The drive wheel may be in the form of a pair of opposing rollers which pull the pre-impregnated fibre material from the spool and feed the material, through the cutting mechanism to the heaters, described below.

### Reference 9 Fibre Cutting mechanism

The fibre on the spool may be a continuous length of fibre extending through the reinforcement material on the spool. This fibre may be optionally cut at predetermined positions as the material passes through the cutting mechanism. This thereby creates a discontinuous length of fibre i.e. a plurality of discrete lengths of fibre as opposed to one continuous length interrupting of the continuous fibres may lead to an increase in the CTE value.

It also allows different fibre distributions to be realised across each layer and through the part on different layers. The cutting may be achieved by a simple knife or blade mechanism arranged to engage against a stationary block or recess. The cutting mechanism is also used when a layer has ended. So that the toolhead can move to the next layer.

### Reference 10 Fibre Product Pre-Heater

The drive wheel 8 is activated to drive the reinforcement fibre from the spool through fibre product pre-heater. Here, by means of infrared or other heat source, the continuous or not cut fibre material is heated up to a fusion temperature i.e. a temperature at which the material is sufficiently melted that it will bond with the preceding layer. In one example, for a material PEI this will be heated to approximately 210 degrees Celsius over a period of approximately 5 seconds. An arrangement of multiple pre-heaters can be used in the toolhead. For which each pre-heater can be set at a different process temperature.

### Reference 11 Compaction Roller

As shown in figure 4 the line of movement of the reinforcement fibre from the spool is such that it intersects with the preceding layer at an angle to the horizontal. At this point a roller 11 is located which is controlled to rotate such that the radial speed corresponds to the feed speed of the drive mechanism. The roller 10 acts to compact and consolidate the reinforcement layer with the preceding layer through the application of a small vertical force. The compaction roller can be set in a defined manner in the z-height.

This ensures secure bonding of the heated reinforcement layer and the preceding layer. It will be recognised that both layers have been heated and are therefore able to fuse together.

The compaction roller may additionally be cooled, for example through water or other cooling means, to consolidate the bond between the two layers that are being brought together at this point, and it also prevents sticking to the compaction roller. The temperature of the roller can be controlled in order to create the best consolidation and process condition as possible.

### Reference 12 Anti Slip Press

The arrangement may also be provided with an optional anti-slip press which is arranged to prevent the fibre material (secondary layer) from slipping relative to the thermoplastic material (primary layer). This press may be used at the start of the process and optionally through the remainder of the process if the fusion bond is not sufficient to prevent horizontal separation of layer during the forming process.

Each of the steps above may be advantageously computer controlled in terms of rotational speed of the rollers, flow rate of extruder, temperature of the heaters and pressure of the consolidation roller and anti-slip press. Thus, a smooth and continuous process may be realised.

After the first pair of layers i.e. one thermoplastic layer and one reinforcement layer has been laid the next pair may be laid on top. The process can be repeated until the desired product thickness/height has been reached.

As described herein the invention combines 2 materials in 1 process. This combination of materials creates a laminate which has better properties than the current materials available for large scale 3D printing. Combining a continuous fibre with an additional thermoplastic material layer has the benefit of reducing cost price and increasing production output in comparison to automatic tape placement technology. Moreover the reinforcement with continuous and/or long fibres creates a composite material with very low thermal expansion. The use of the invention also ensures a high level of automation, reducing material and labour cost and the need for labour skills.

The selective distribution of the reinforcement fibres in each layer will now be described.

There are two aspects to the operability of the apparatus described herein:
(A) First, the linear distribution of the reinforcement fibres may be selectively controlled. This refers to selectively cutting or separating the fibres so that a layer of reinforcement comprises a series of fibres, all aligned, but with discrete dimension in a lengthwise direction. These may be separated by small or large spaces depending on the thermal and/or mechanical characteristics of the desired components. Each layer of the component may be provided with the same or different distribution or separation.
(B) The second aspect is the selective angular displacement of fibres in subsequent layers. This refers to the additional functionality of the apparatus that not only allows distribution of fibres between each layer to be modified (as described in paragraph A above) but additionally allows for an angular displacement between one or more subsequent layers making up the sandwich or laminate of the component.

These two options provide for huge variability in the tensile strength and thermal performance of each layer and thus the resulting component. Modelling allows the optimal distribution across and between layers to be determined and then the apparatus described herein programmed to deposit the reinforcement fibres in the desired profile across and depth-wise through the component.

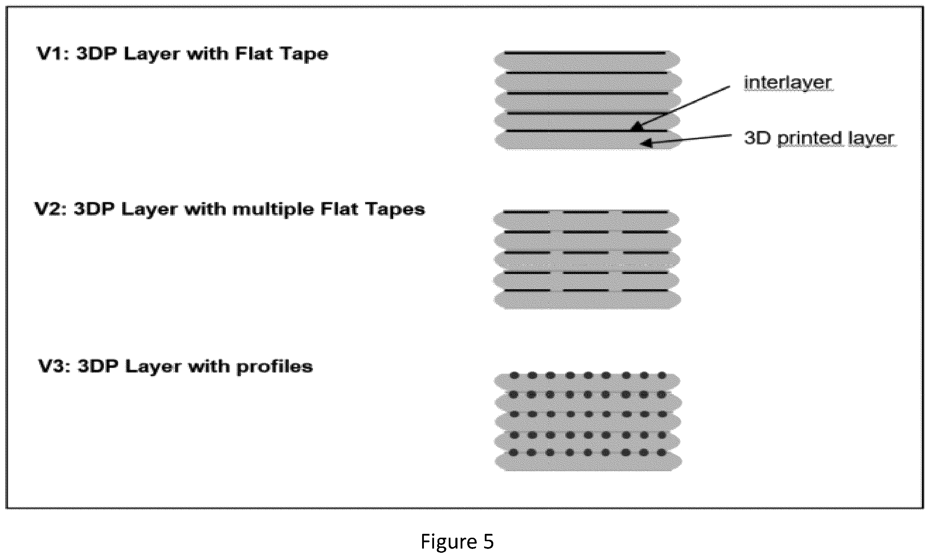

Figures 5 V1, V2 and V3 illustrate alternative reinforcement fibre distribution patterns and types as will now be described.

For example, in a basic arrangement alternating 3D printed layers may be provided, each with a reinforced interlayer on top wherein both layers can be printed as part of the same process i.e. immediately sequentially according to the apparatus described herein.

In another example, a 3D printed layer may be provided made from thermoplastic or thermoset matrix, with or without short fibre reinforcement may be created.

In yet another example, a reinforced interlayer may be provided made from pre-impregnated thermoplastic or thermoset in which a matrix with long and/or continuous fibre reinforcement is provided.

Each arrangement may have its own specific advantages for an application and each can be conveniently manufactured according to the apparatus and method described herein.

Returning to figure 5, the examples shown are in cross-section and illustrate visually the potential distribution of the reinforcement layers across and through the component.

In example V1 an interlayer reinforcement uni-directional (UD tape) or multi-directional (weaving, NCF) may be used. Here one tape may be used for each interlayer with an arrangement in which there is symmetrical or asymmetrical tape with widths ≤ or > the width of the 3D printed layer width.

In example V2, an interlayer consists of two or more flat tapes in which the arrangement is symmetrical or asymmetrical.

In example V3 and interlayer consists of one or more profiles with UD fibre reinforcement. The cross-section may be round, square, variable or another suitable cross-section.

In each of the examples described herein the continuous fibre material may be selected from any suitable stock of material including, but not limited to, carbon, glass, aramids, ceramic, metallic, optical and other high performance or technical fibres e.g Dyneema ^{®}.

Other materials may also be used together with the reinforcement fibres in the intermediate or interlayer such as electric conductive materials or heatable materials. Thus an arrangement may be provided which can be used to print toolings with integrated heating for curing FRP parts out of autoclave or oven. Furthermore, materials may be introduced which may be used to measure the temperature inside the printed tooling/part

Furthermore the following may additionally be adapted:
variable fibre volume fraction
changeable matrix/fibre ratio
combination of short fibre or non-reinforced matrix with continuous or long fibres in uni-
or bi-direction

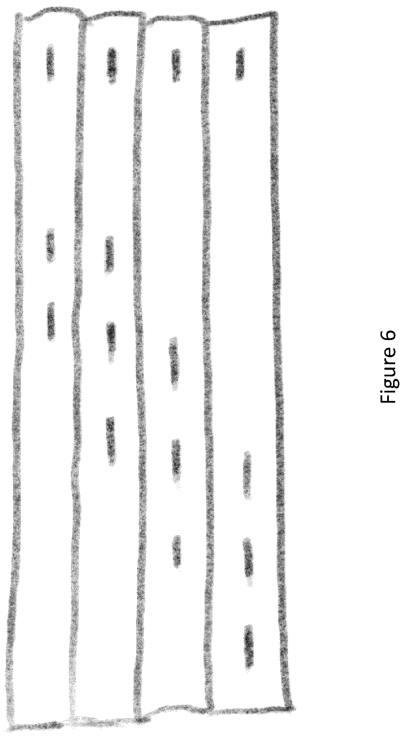

Figure 6 illustrates a further more complex/hybrid distribution pattern of reinforcement fibres and associated layers. In the example shown in figure 5 a non-linear distribution is shown which may correlate to thermal and/or mechanical requirements for the given application. The apparatus and method advantageously allows for configurations such as that illustrated (for example only) in figure 5 to be realised.

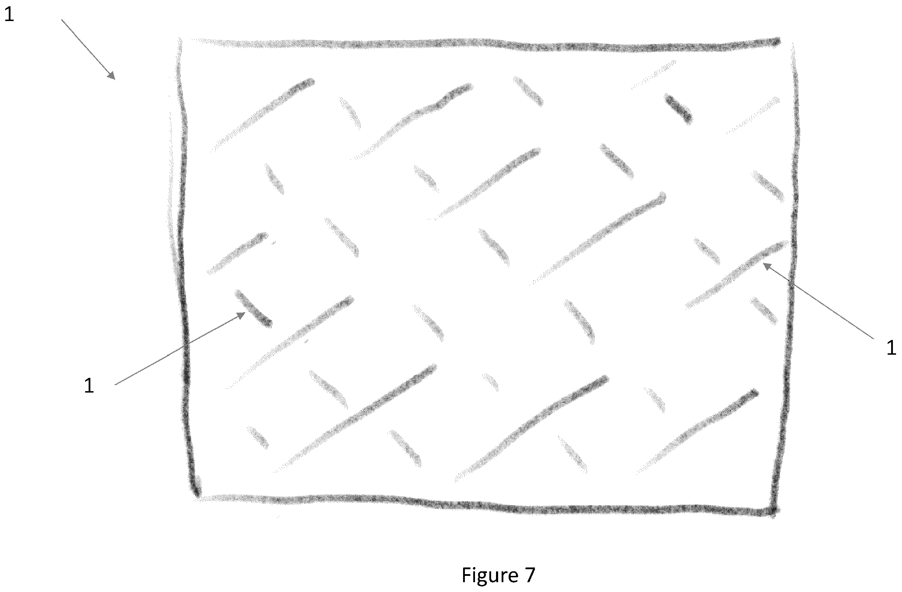

Figure 7 illustrates the angular control the apparatus and method additionally provides with the lines indicating different orientations of fibres through the depth of the component.

As described above the arrangement described herein provides significant flexibility in designing and constructing multi-material, multi-layer additive manufactured composite components. Specifically the components can be optimised for load carrying properties, stress and fatigue resistance and also thermal performance in terms of controlled CTE values.

An application of the apparatus and method described herein is the substitution of tooling and intensifiers, which are used for the curing of aircraft composite parts at high temperatures in the autoclave. For example, CFRP intensifiers aerospace components can be replaced using such a technique. Furthermore, large composite tooling which needs geometric accuracy at high temperatures, could also be realised.

The spools can also be advantageously changed during printing. For example, an automatic spool changer could be used when printing large tooling which requires several 1000 meters of reinforcement. Furthermore, the spool may also be used within a cartridge (housing) to avoid moisture take up. Thus, a more controlled environment is provided for the tape. Humidity and temperature conditions may thereby be controlled. This may also make changeover of the spool faster and more convenient using such an enclosure.

## Claims

1. A method of forming a multi-layer thermoplastic component, the method comprising the steps of:
(A) laying a first layer of thermoplastic material (2a) into a predetermined shape;
(B) laying, on top of the previous layer, a second layer of thermoplastic material (2b) together with or without fibrous material compressed onto the thermoplastic material; and
(C) repeating step (B) until a predetermined number of layers have been laid;
wherein the lengths and/or distribution of laying up of the fibrous material with respect to one or more preceding layer(s) is changed between different layers of the component being manufactured; and
the laying up of the first and/or second layers is performed according to a predetermined fibre distribution profile corresponding to a predetermined mechanical and/or thermal operating profile of the component.

2. A method as claimed in claim 1, wherein the fibrous component is selected from (a) a continuous fibre extending through the thermoplastic; or (b) a plurality of discrete discontinuous fibres extending through the thermoplastic.

3. A method as claimed in any preceding claim, wherein each of the first and second layers are laid as a plurality of adjacent strips, each strip abutting with an adjacent strip to form a continuous layer surface extending in multiple directions.

4. A method as claimed in any preceding claim wherein the fibres within the second layer may be selectively cut or separated at predetermined lengths before being laid upon a preceding layer.

5. A method as claimed in claim 4, wherein the fibres within the second layer are cut at lengths according to a predetermined fibre length distribution across each layer and through the thickness of the component.

6. A method as claimed in any preceding claim wherein the second layer is laid immediately after each first layer within a pair of first and second layers.

7. A method as claimed in any preceding claim wherein the second layer is laid at an angle with respect to the angle at which the first or preceding layer has been laid.

8. A method as claimed in any preceding claim wherein the second layer is laid by means of a feed mechanism and wherein the feed mechanism may be selectively controlled so as to selectively start and stop feed of the fibrous containing layer during laying of the first and second layers.

9. A method as claimed in any preceding claim wherein the relative angle of laying up of the fibrous material with respect to one or more preceding layer(s) may be changed between different layers of the component being manufactured.

10. A method as claimed in any preceding claim wherein an upper surface of a preceding layer is heated prior to a subsequent layer being laid upon the layer.

11. A method as claimed in any preceding claim, wherein after being laid a compaction force is applied to the upper surface of the second layer and the layer is optionally simultaneously cooled.

12. A method as claimed in any preceding claim wherein the fibrous material is a FT300B-3K carbon weaving and the thermoplastic is a PEI Ultem 1000.

13. A multi-component composite material additive manufacture apparatus comprising:
a primary layer laying unit (5) arranged in use to lay a layer of primary material onto a substrate or preceding layer of a component; and
a secondary layer laying unit (7, 8, 9, 10, 11, 12) arranged to feed a secondary material onto the primary or preceding layer, said secondary material containing a continuous or discontinuous fibrous material content;
wherein the apparatus is configured to:
change the lengths and/or distribution of laying up of the fibrous material content with respect to one or more preceding layer(s) between different layers of the component being manufactured; and
perform the laying up of the primary and/or secondary layer(s) according to a predetermined fibre distribution profile corresponding to a predetermined mechanical and/or thermal operating profile of the component being manufactured.

14. An apparatus as claimed in claim 13, wherein the apparatus is arranged in use to lay the primary layer in a first direction as a plurality of adjacent strips of primary material, each strip in abutment to an adjacent strip and collectively forming a primary layer.

15. An apparatus as claimed in any of claims 13 or 14, wherein the apparatus is arranged in use to selectively cut or separate the fibrous material within the secondary layer prior to laying onto a preceding primary layer.

16. An apparatus as claimed in any of claims 13 to 15, further comprising a heating apparatus arranged to heat an upper surface of a preceding primary layer prior to laying of a secondary layer.

17. An apparatus as claimed in any of claims 13 to 16, further comprising a compression arrangement arranged to compress a laid secondary layer against a preceding primary layer.

18. An apparatus as claimed in claim 17, wherein the compression arrangement is in the form of a roller arranged in use to be brought into contact with the upper surface of the secondary layer and optionally including a roller cooling mechanism.

19. An apparatus as claimed in any of claims 13 to 18, wherein the primary layer is laid by means of an extruder having a discharge nozzle for laying the primary material onto the substrate or preceding layer.

20. An apparatus as claimed in any of claims 13 to 19, wherein the primary material is laid from an extruder mechanism and the secondary material is laid from a supply spool mechanism, wherein the supply spool mechanism comprises a heater mechanism arranged to heat the secondary material in advance of being laid, a drive mechanism to drive the secondary material from a spool and through the heater mechanism and an optional cutting arrangement arranged in use to cut or separate fibres contained within the secondary material.

21. An additive manufacturing apparatus comprising a robotic manipulator arranged to move in multiple directions and to support a multi-component composite material additive manufacture apparatus as claimed in any of claims 13 to 20, the robotic manipulator arranged in use to follow:
(A) a pre-determined movement programme to form a multi-layered, multi-material composite component profile; and
(B) a pre-determined fibre distribution pattern of continuous or discontinuous fibres.

22. An aerospace component manufactured according to the method of any of claims 1 to 12.

23. An aerospace component according to claim 22, wherein the aerospace component is an aerodynamic component of an aircraft structure.

## Patentansprüche

1. Verfahren zum Ausbilden einer mehrschichtigen thermoplastischen Komponente, wobei das Verfahren die folgenden Schritte umfasst:
(A) Verlegen einer ersten Schicht aus thermoplastischem Material (2a) in eine festgelegte Form;
(B) Verlegen einer zweiten Schicht aus thermoplastischem Material (2b) zusammen mit oder ohne auf das thermoplastische Material aufgepresstem Fasermaterial auf die vorherige Schicht und
(C) Wiederholen von Schritt (B), bis eine festgelegte Anzahl von Schichten verlegt wurde;
wobei die Längen und/oder die Verteilung des Verlegens des Fasermaterials in Bezug auf eine oder mehrere vorherige Schicht(en) zwischen verschiedenen Schichten der herzustellenden Komponente geändert werden und
das Verlegen der ersten und/oder zweiten Schicht gemäß einem festgelegten Faserverteilungsprofil erfolgt, das einem festgelegten mechanischen und/oder thermischen Betriebsprofil der Komponente entspricht.

2. Verfahren nach Anspruch 1, wobei die Faserkomponente ausgewählt ist aus (a) einer Endlosfaser, die sich durch den Thermoplast erstreckt; oder (b) mehreren einzelnen unterbrochenen Fasern, die sich durch den Thermoplast erstrecken.

3. Verfahren nach einem der vorhergehenden Ansprüche, wobei die erste und die zweite Schicht jeweils als mehrere benachbarte Streifen verlegt werden, wobei jeder Streifen an einem benachbarten Streifen anliegt, um eine durchgehende Schichtfläche auszubilden, die sich in mehrere Richtungen erstreckt.

4. Verfahren nach einem der vorhergehenden Ansprüche, wobei die Fasern innerhalb der zweiten Schicht selektiv in festgelegten Längen durchgeschnitten oder getrennt werden können, bevor sie auf einer vorherigen Schicht verlegt werden.

5. Verfahren nach Anspruch 4, wobei die Fasern innerhalb der zweiten Schicht gemäß einer festgelegten Faserlängenverteilung über jede Schicht und durch die Dicke des Bauteils in Längen durchgeschnitten werden.

6. Verfahren nach einem der vorhergehenden Ansprüche, wobei die zweite Schicht unmittelbar nach jeder ersten Schicht innerhalb eines Paares aus einer ersten und zweiten Schicht verlegt wird.

7. Verfahren nach einem der vorhergehenden Ansprüche, wobei die zweite Schicht in Bezug auf den Winkel, in dem die erste oder die vorherige Schicht verlegt wurde, angewinkelt verlegt wird.

8. Verfahren nach einem der vorhergehenden Ansprüche, wobei die zweite Schicht mittels eines Zuführmechanismus verlegt wird und wobei der Zuführmechanismus selektiv gesteuert werden kann, um die Zufuhr der faserhaltigen Schicht während des Verlegens der ersten und zweiten Schicht selektiv zu starten und zu stoppen.

9. Verfahren nach einem der vorhergehenden Ansprüche, wobei der relative Winkel des Verlegens des Fasermaterials in Bezug auf eine oder mehrere vorherige Schicht(en) zwischen verschiedenen Schichten der herzustellenden Komponente geändert werden kann.

10. Verfahren nach einem der vorhergehenden Ansprüche, wobei die Oberseite einer vorherigen Schicht erwärmt wird, bevor eine nachfolgende Schicht auf der Schicht verlegt wird.

11. Verfahren nach einem der vorhergehenden Ansprüche, wobei nach dem Verlegen eine Verdichtungskraft auf die Oberseite der zweiten Schicht aufgebracht wird und die Schicht optional gleichzeitig gekühlt wird.

12. Verfahren nach einem der vorhergehenden Ansprüche, wobei das Fasermaterial ein FT300B-3K-Kohlenstoffgewebe ist und der Thermoplast ein PEI Ultem 1000 ist.

13. Einrichtung für die additive Fertigung eines Mehrkomponenten-Verbundmaterials, Folgendes umfassend:
eine Primärschichtverlegeeinheit (5), die dazu angeordnet ist, bei der Verwendung eine Schicht aus Primärmaterial auf ein Substrat oder eine vorherige Schicht einer Komponente zu verlegen; und
eine Sekundärschichtverlegeeinheit (7, 8, 9, 10, 11, 12), die dazu angeordnet ist, der Primärschicht oder vorherigen Schicht ein Sekundärmaterial zuführen, wobei das Sekundärmaterial einen durchgehenden oder unterbrochenen Fasermaterialgehalt enthält;
wobei die Einrichtung ferner zu Folgendem ausgelegt ist:
Ändern der Längen und/oder Verteilung des Verlegens des Fasermaterials in Bezug auf eine oder mehrere vorherige Schicht(en) zwischen verschiedenen Schichten der herzustellenden Komponente und
Durchführen des Verlegens der Primär- und/oder Sekundärschicht(en) gemäß einem festgelegten Faserverteilungsprofil, das einem festgelegten mechanischen und/oder thermischen Betriebsprofil der herzustellenden Komponente entspricht.

14. Einrichtung nach Anspruch 13, wobei die Einrichtung dazu angeordnet ist, bei der Verwendung die Primärschicht in einer ersten Richtung als mehrere benachbarte Streifen aus Primärmaterial zu verlegen, wobei jeder Streifen an einem benachbarten Streifen anliegt und sie gemeinsam eine Primärschicht ausbilden.

15. Einrichtung nach Anspruch 13 oder 14, wobei die Einrichtung dazu angeordnet ist, bei der Verwendung das Fasermaterial innerhalb der Sekundärschicht selektiv durchzuschneiden oder zu trennen, bevor es auf einer vorherigen Primärschicht verlegt wird.

16. Einrichtung nach einem der Ansprüche 13 bis 15, ferner umfassend eine Heizeinrichtung, die dazu angeordnet ist, die Oberseite einer vorherigen Primärschicht zu erwärmen, bevor eine Sekundärschicht verlegt wird.

17. Einrichtung nach einem der Ansprüche 13 bis 16, ferner umfassend eine Kompressionsanordnung, die dazu angeordnet ist, eine verlegte Sekundärschicht gegen eine vorherige Primärschicht zu komprimieren.

18. Einrichtung nach Anspruch 17, wobei die Kompressionsanordnung in Form einer Walze ausgebildet ist, die dazu angeordnet ist, bei der Verwendung mit der Oberseite der Sekundärschicht in Kontakt gebracht zu werden, und optional einen Walzenkühlmechanismus umfasst.

19. Einrichtung nach einem der Ansprüche 13 bis 18, wobei die Primärschicht mittels eines Extruders mit einer Austragdüse zum Verlegen des Primärmaterials auf dem Substrat oder der vorherigen Schicht verlegt wird.

20. Einrichtung nach einem der Ansprüche 13 bis 19, wobei das Primärmaterial von einem Extrudermechanismus verlegt wird und das Sekundärmaterial von einem Zuführspulenmechanismus verlegt wird, wobei der Zuführspulenmechanismus einen Heizmechanismus, der dazu angeordnet ist, das Sekundärmaterial vor dem Verlegen zu erwärmen, einen Antriebsmechanismus zum Antreiben des Sekundärmaterials von einer Spule und durch den Heizmechanismus und eine optionale Schneideanordnung, die dazu angeordnet ist, bei der Verwendung im Sekundärmaterial enthaltene Fasern durchzuschneiden oder zu trennen, umfasst.

21. Einrichtung für die additive Fertigung, umfassend einen Robotermanipulator, der dazu angeordnet ist, sich in mehrere Richtungen zu bewegen und eine Einrichtung für die additive Fertigung eines Mehrkomponenten-Verbundmaterials nach einem der Ansprüche 13 bis 20 zu tragen, wobei der Robotermanipulator dazu ausgelegt ist, bei der Verwendung Folgendem zu folgen:
(A) einem festgelegten Bewegungsprogramm, um ein mehrschichtiges Verbundkomponentenprofil aus mehreren Materialien auszubilden; und
(B) einem festgelegten Faserverteilungsmuster aus durchgehenden oder unterbrochenen Fasern.

22. Luft- und Raumfahrtkomponente, die gemäß dem Verfahren nach einem der Ansprüche 1 bis 12 gefertigt ist.

23. Luft- und Raumfahrtkomponente nach Anspruch 22, wobei die Luft- und Raumfahrtkomponente eine aerodynamische Komponente einer Flugzeugstruktur ist.

## Revendications

1. Procédé de formation d'un composant thermoplastique multicouche, le procédé comprenant les étapes de :
(A) la pose d'une première couche de matériau thermoplastique (2a) selon une forme prédéterminée ;
(B) la pose, sur la couche précédente, d'une seconde couche de matériau thermoplastique (2b) avec ou sans matériau fibreux comprimé sur le matériau thermoplastique ; et
(C) la répétition de l'étape (B) jusqu'à la pose d'un nombre prédéterminé de couches ;
les longueurs et/ou la répartition de la pose du matériau fibreux par rapport à une ou plusieurs couches précédentes étant changées entre différentes couches du composant en cours de fabrication ; et
la pose des première et/ou seconde couches étant réalisée selon un profil de distribution de fibres prédéterminé correspondant à un profil de fonctionnement mécanique et/ou thermique prédéterminé du composant.

2. Procédé selon la revendication 1, le composant fibreux étant choisi parmi (a) une fibre continue s'étendant à travers le thermoplastique ; ou (b) une pluralité de fibres discontinues discrètes s'étendant à travers le thermoplastique.

3. Procédé selon l'une quelconque des revendications précédentes, chacune des première et seconde couches étant posée sous la forme d'une pluralité de bandes adjacentes, chaque bande venant buter contre une bande adjacente pour former une surface de couche continue s'étendant dans des directions multiples.

4. Procédé selon l'une quelconque des revendications précédentes, les fibres à l'intérieur de la seconde couche pouvant être sélectivement coupées ou séparées à des longueurs prédéterminées avant d'être posées sur une couche précédente.

5. Procédé selon la revendication 4, les fibres à l'intérieur de la seconde couche étant coupées à des longueurs conformes à une distribution prédéterminée de longueurs de fibres à travers chaque couche et à travers l'épaisseur du composant.

6. Procédé selon l'une quelconque des revendications précédentes, la seconde couche étant posée immédiatement après chaque première couche à l'intérieur d'une paire de première et seconde couches.

7. Procédé selon l'une quelconque des revendications précédentes, la seconde couche étant posée à un angle par rapport à l'angle auquel la première couche ou la couche précédente a été posée.

8. Procédé selon l'une quelconque des revendications précédentes, la seconde couche étant posée au moyen d'un mécanisme d'alimentation et le mécanisme d'alimentation pouvant être commandé sélectivement de manière à démarrer et arrêter sélectivement l'alimentation de la couche contenant des fibres pendant la pose des première et seconde couches.

9. Procédé selon l'une quelconque des revendications précédentes, l'angle relatif de pose du matériau fibreux par rapport à une ou plusieurs couches précédentes pouvant être modifié entre différentes couches du composant en cours de fabrication.

10. Procédé selon l'une quelconque des revendications précédentes, une surface supérieure d'une couche précédente étant chauffée avant qu'une couche suivante soit posée sur la couche.

11. Procédé selon l'une quelconque des revendications précédentes, après avoir été posée, une force de compactage étant appliquée à la surface supérieure de la seconde couche et la couche étant éventuellement refroidie simultanément.

12. Procédé selon l'une quelconque des revendications précédentes, le matériau fibreux étant un tissu de carbone FT300B-3K et le thermoplastique étant un PEI Ultem 1000.

13. Appareil de fabrication additive pour matériau composite multi-composants comprenant :
une unité de pose de couche primaire (5) agencée lors de l'utilisation pour déposer une couche de matière primaire sur un substrat ou une couche précédente d'un composant ; et
une unité secondaire de pose (7, 8, 9, 10, 11, 12) agencée pour alimenter un matériau secondaire sur la couche primaire ou précédente, ledit matériau secondaire contenant une teneur en matière fibreuse continue ou discontinue ;
l'appareil étant configuré pour :
changer les longueurs et/ou la répartition de la pose de la matière fibreuse par rapport à une ou plusieurs couches précédentes entre différentes couches du composant en cours de fabrication ; et
effectuer la pose de la ou des couches primaire(s) et/ou secondaire(s) selon un profil de distribution de fibres prédéterminé correspondant à un profil de fonctionnement mécanique et/ou thermique prédéterminé du composant en cours de fabrication.

14. Appareil selon la revendication 13, l'appareil étant agencé en utilisation pour poser la couche primaire dans une première direction sous la forme d'une pluralité de bandes adjacentes de matériau primaire, chaque bande étant en butée contre une bande adjacente et formant collectivement une couche primaire.

15. Appareil selon l'une quelconque des revendications 13 ou 14, l'appareil étant agencé en utilisation pour couper ou séparer sélectivement le matériau fibreux à l'intérieur de la couche secondaire avant d'être posé sur une couche primaire précédente.

16. Appareil selon l'une quelconque des revendications 13 à 15, comprenant en outre un appareil de chauffage agencé pour chauffer une surface supérieure d'une couche primaire précédente avant la pose d'une couche secondaire.

17. Appareil selon l'une quelconque des revendications 13 à 16, comprenant en outre un agencement de compression agencé pour comprimer une couche secondaire posée contre une couche primaire précédente.

18. Appareil selon la revendication 17, l'agencement de compression se présentant sous la forme d'un rouleau agencé en utilisation pour être amené en contact avec la surface supérieure de la couche secondaire et comprenant facultativement un mécanisme de refroidissement de rouleau.

19. Appareil selon l'une quelconque des revendications 13 à 18, la couche primaire étant déposée au moyen d'une extrudeuse ayant une buse de décharge pour poser la matière primaire sur le substrat ou la couche précédente.

20. Appareil selon l'une quelconque des revendications 13 à 19, le matériau primaire étant posé à partir d'un mécanisme d'extrudeuse et le matériau secondaire étant posé à partir d'un mécanisme de bobine d'alimentation, le mécanisme de bobine d'alimentation comprenant un mécanisme de chauffage agencé pour chauffer le matériau secondaire avant d'être posé, un mécanisme d'entraînement destiné à entraîner le matériau secondaire à partir d'une bobine et à travers le mécanisme de chauffage, ainsi qu'un dispositif de coupe optionnel agencé lors de l'utilisation pour couper ou séparer les fibres contenues dans le matériau secondaire.

21. Appareil de fabrication additive comprenant un manipulateur robotique agencé pour se déplacer dans de multiples directions et pour prendre en charge un appareil de fabrication additive de matériaux composites multi-composants selon l'une quelconque des revendications 13 à 20, le manipulateur robotique étant agencé en utilisation pour suivre :
(A) un programme de mouvement prédéterminé pour former un profil de composant composite multicouche et multi-matériaux ; et
(B) un modèle de distribution de fibres prédéterminé de fibres continues ou discontinues.

22. Composant aérospatial fabriqué selon le procédé selon l'une quelconque des revendications 1 à 12.

23. Composant aérospatial selon la revendication 22, le composant aérospatial étant un composant aérodynamique d'une structure d'aéronef.
